# EUROPEAN PATENT APPLICATION

(11) **EP 4 451 456 A1**
(43) Date of publication of application: **23.10.2024**
(21) Application number: 22927924.5
(22) Date of filing: 28.02.2022
(51) Int. Cl.: H01M 50/543

(54) **BATTERY, ELECTRICAL APPARATUS, AND METHOD AND DEVICE FOR MANUFACTURING BATTERY**

(71) Applicant: Contemporary Amperex Technology (Hong Kong) Limited, Central, Central And Western District (HK)
(72) Inventor: HE, Runyong, Ningde, Fujian 352100 (CN); WANG, Peng, Ningde, Fujian 352100 (CN); QIN, Feng, Ningde, Fujian 352100 (CN)
(74) Representative: Gong, Jinping
(86) International application number: PCT/CN2022/078488
(87) International publication number: WO 2023/159643

(57) **Abstract**

The present application provides a battery, a power consumption apparatus, and a battery manufacturing method and device. The battery includes: a box body, including a side wall for forming an accommodating cavity by enclosing; a battery cell group, disposed inside the accommodating cavity and including a plurality of battery cells, where the plurality of battery cells are stacked; an end plate, disposed inside the accommodating cavity and located between the battery cell group and the side wall; an electrical energy lead-out member, used for leading out electrical energy of the battery cell group, where the electrical energy lead-out member includes a first segment, a second segment, and a third segment connected in sequence, the second segment is embedded in the end plate, the first segment and the third segment extend out from the end plate, and the first segment is electrically connected to the battery cell group; and/or a sampling unit, used for collecting signals from the battery cell group, where the sampling unit penetrates the end plate, and one end of the sampling unit is connected to the battery cell group. In the technical solution of the present application, the battery is strongly integrated, which is beneficial to improving space utilization of the battery to increase an energy density of the battery and is also beneficial to improving connection stability of the electrical energy lead-out member and the sampling unit.

## Description

### Technical Field

The present application relates to the field of battery technology, and particularly to a battery, a power consumption apparatus, and a battery manufacturing method and device.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

Improvement on energy densities of batteries is currently an important direction for the development of the battery industry. Low space utilization of existing batteries seriously affects the improvement on the energy densities of batteries.

### Summary

The present application provides a battery, a power consumption apparatus, and a battery manufacturing method and device, where the battery can effectively improve space utilization and is beneficial to increasing an energy density.

The present application provides a battery, including: a box body, including a side wall for forming an accommodating cavity by enclosing; a battery cell group, disposed inside the accommodating cavity and including a plurality of battery cells, where the plurality of battery cells are arranged in a stack; an end plate, disposed inside the accommodating cavity and located between the battery cell group and the side wall; an electrical energy lead-out member, configured for leading out electrical energy of the battery cell group, where the electrical energy lead-out member includes a first segment, a second segment, and a third segment connected in sequence, the second segment is embedded in the end plate, the first segment and the third segment extend out from the end plate, and the first segment is electrically connected to the battery cell group; and/or a sampling unit, configured for collecting signals of the battery cell group, where the sampling unit penetrates the end plate, and one end of the sampling unit is connected to the battery cell group.

In the foregoing technical solution, the electrical energy lead-out member of the battery is embedded in the end plate and/or the sampling unit penetrates the end plate, so that a wire passing space is not required to be reserved for the electrical energy lead-out member and the sampling unit between the end plate and a wall of the box body in the battery, which is beneficial to improving space utilization of the battery, thereby increasing an energy density of the battery. In addition, the electrical energy lead-out member and/or the sampling unit are integrated to the end plate, and the end plate limits and fastens the electrical energy lead-out member and/or the sampling unit, thereby effectively improving connection stability of the electrical energy lead-out member and the sampling unit, reducing the risk of disconnection of the electrical energy lead-out member and the sampling unit due to shaking, vibration, and other reasons, then reducing the risk of accidents such as short circuits and fires caused by the disconnection of the electrical energy lead-out member, and improving performance stability of the battery.

In some embodiments, the first segment extends out from a top of the end plate to electrically connect with the battery cell group.

In the foregoing technical solution, the first segment of the electrical energy lead-out member extends out from the top of the end plate, while a current collecting member of a battery cell group is disposed at a top of an overall structure of an existing battery in order to facilitate assembly and maintenance. Therefore, in the present application, the first segment of the electrical energy lead-out member extends out from the top of the end plate, so as to shorten a path of electrical connection with the battery cell group and facilitate assembly and maintenance.

In some embodiments, the third segment extends out from a bottom of the end plate.

In the foregoing technical solution, the first segment of the electrical energy lead-out member extends out from the top of the end plate, the third segment extends out from the bottom of the end plate, and the electrical energy lead-out member extends in a thickness direction of the end plate, thereby preventing the electrical energy lead-out member from occupying the space between the side wall of the box and the end plate. The wire passing space is not required to be reserved between the end plate and the side wall of the box body, thereby effectively improving the space utilization in the box body. Moreover, such configuration avoids positional interference between the end plate and the side wall of the box body when the end plate is placed downwards into the box body during battery assembly.

In some embodiments, the box body further includes a bottom wall, the side wall is disposed at a periphery of the bottom wall, the bottom wall is formed with a through hole, and the third segment extends out from the through hole to lead the electrical energy to the outside of the box body.

In the foregoing technical solution, the third segment extends out from the through hole on the bottom wall of the box body to facilitate formation of an electrical energy lead-out portion of the battery, so as to lead the electrical energy of the battery to the outside of the box body to supply power to the power consumption apparatus. The bottom wall of the box body is provided with the through hole to facilitate passing of the electrical energy lead-out member, so as to improve assembly convenience of the battery.

In some embodiments, the battery further comprises: an insulator, where the insulator is disposed between a wall of the through hole and the electrical energy lead-out member, so as to insulate the wall of the through hole from the electrical energy lead-out member.

In the foregoing technical solution, the insulator is disposed between the wall of the through hole of the box body and the electrical energy lead-out member to form an insulation protection between the box body and the electrical energy lead-out member, thereby avoiding a short circuit between the electrical energy lead-out member and the box body, and ensuring insulation of the box body to reduce the risk of electric leakage of the box body.

In some embodiments, the insulator is integrally formed with the end plate.

In the foregoing technical solution, the integral formation of the insulator and the end plate is beneficial to improving assembly convenience of the battery. Compared with a split configuration of the insulator, the structure of the insulator integrally formed on the end plate has high foolproof performance, and can effectively prevent the risk of missing assembly of the insulator in an assembly process of the battery, simplify the assembly process, and reduce an assembly defect rate and a rework rate.

In some embodiments, the end plate and the electrical energy lead-out member are injection molded into one piece.

In the foregoing technical solution, the end plate and the electrical energy lead-out member are integrally formed by injection molding, and the electrical energy lead-out member has conductivity. The electrical energy lead-out member is integrally formed with the end plate by injection molding, to facilitate an injection molding portion of the end plate to directly insulate and protect the electrical energy lead-out member, thereby avoiding a short circuit of the electrical energy lead-out member. In addition, the end plate plays a firm limiting role on the electrical energy lead-out member, to further improve connection stability of the electrical energy lead-out member. Meanwhile, after the integral injection molding, the junction between the electrical energy lead-out member and the end plate is sealed. When high-temperature and high-pressure gas is generated in the battery, the gas cannot directly impact the electrical energy lead-out member, thereby effectively avoiding the risk of short circuits and fires in the battery due to melting of the electrical energy lead-out member by the high-temperature and high-pressure gas, and improving safety performance of the battery.

In some embodiments, the electrical energy lead-out member is detachably connected to the end plate, and the electrical energy lead-out member is bent at least twice in an extension direction of the electrical energy lead-out member.

In the foregoing technical solution, the electrical energy lead-out member is detachably connected to the end plate, and the end plate and the electrical energy lead-out member may be produced separately before assembly, so process difficulty is low. The structure of the electrical energy lead-out member bent at least twice enables the electrical energy lead-out member to have at least two bent angles. When high-temperature and high-pressure gas is generated in the battery, the bending of the electrical energy lead-out member is beneficial to increasing gas flow resistance and preventing gas from flowing along the gap between the electrical energy lead-out member and the end plate and a flow channel of the electrical energy lead-out member, thereby effectively avoiding the risk of short circuits and fires in the battery due to the melting of the electrical energy lead-out member by the high-temperature and high-pressure gas, and improving the safety performance of the battery.

In some embodiments, a bent angle of the electrical energy lead-out member is 40° to 130°. A conductive metal is generally used as the electrical energy lead-out member in the battery. A too small bent angle easily affects structural strength of the electrical energy lead-out member to cause a risk of breakage of the electrical energy lead-out member, while a too large bent angle cannot form an effective blocking effect on airflow. In this embodiment, the bent angle of the electrical energy lead-out member is controlled between 40° and 130°, so as to ensure the structural strength of the electrical energy lead-out member and achieve a good blocking effect on the gas.

In some embodiments, the end plate includes: an end plate body having a first surface facing the battery cell group and a second surface facing away from the battery cell group, where the first surface abuts against the battery cell group; and a plurality of first reinforcing ribs formed on the second surface and abutting against the side wall, where the plurality of first reinforcing ribs are arranged at intervals up and down, and where the second segment penetrates the plurality of first reinforcing ribs.

In the foregoing technical solution, the end plate includes the end plate body and the reinforcing ribs formed on the end plate body, where the reinforcing ribs effectively improve the structural strength of the end plate and improve deformation resistance of the end plate. Meanwhile, compared with increasing an overall thickness of the end plate to improve the strength of the end plate, the reinforcing ribs ensure the structural strength of the end plate and reduce overall weight and material loss of the end plate, thereby reducing weight and material costs of the battery. Moreover, the electrical energy lead-out member penetrates the plurality of first reinforcing ribs to reduce assembly difficulty of the electrical energy lead-out member and the end plate. In the implementation mode of "the electrical energy lead-out member is detachably connected to the end plate", the plurality of first reinforcing ribs form a plurality of limit portions for the electrical energy lead-out member to fix and bend the electrical energy lead-out member. In addition, the electrical energy lead-out member penetrates the plurality of first reinforcing ribs to facilitate intuitive observation of a state of the electrical energy lead-out member on the end plate for easy maintenance.

In some embodiments, the electrical energy lead-out member is detachably disposed on the end plate, and each of the first reinforcing ribs is provided with an avoidance port for avoiding the electrical energy lead-out member.

In the foregoing technical solution, each first reinforcing rib is provided with the avoidance port for avoiding the electrical energy lead-out member, the electrical energy lead-out member passes through the avoidance port of each first reinforcing rib during assembly, and the electrical energy lead-out member may be assembled on the end plate, whereby assembly difficulty is reduced. In addition, misalignment of the avoidance ports enables the electrical energy lead-out member to have a bent angle, with easy implementation and strong practicality.

In some embodiments, the battery further includes: an output electrode, where one end of the output electrode is electrically connected to the battery cell group, so as to output the electrical energy of the battery cell group, and the other end of the output electrode is electrically connected to the first segment.

In the foregoing technical solution, the battery is provided with the output electrode, one end of the output electrode is electrically connected to the battery cell group, and the other end is connected to the first segment of the electrical energy lead-out member, so as to improve a modular assembly level of the battery and facilitate maintenance of the battery.

In some embodiments, the battery further includes: a high-voltage distribution box disposed outside the box body, where the third segment extends out of the box body to connect with the high-voltage distribution box.

In the foregoing technical solution, the third segment of the electrical energy lead-out member extends out of the box body to connect with the high-voltage distribution box, and the high-voltage distribution box plays a role in protecting a system of the power battery and transmitting and distributing power in charging and discharging processes of the battery.

In some embodiments, the end plate is provided with a passage for the sampling unit to pass through, and the passage penetrates the end plate and extends from top to bottom of the end plate.

In the foregoing technical solution, the end plate is provided with the passage, and the sampling unit passes through the passage and is limited in the end plate, where the sampling unit can be simply and quickly integrated and limited in the end plate without changing the structure of the sampling unit, so the operation is simple and easy to implement, and the sampling unit can be flexibly increased, decreased, and adjusted, with strong practicality.

In some embodiments, one end of the sampling unit extends out from the top of the end plate to connect with the battery cell group, and the other end of the sampling unit extends out from the bottom of the end plate and passes through the box body to lead the signals to the outside of the box body.

In the foregoing technical solution, one end of the sampling unit extends out from the top of the end plate to connect with the battery cell group, and the other end of the sampling unit extends out from the bottom of the end plate and passes out. This structure can effectively prevent the sampling unit from occupying a space between the side wall of the box body and the end plate, and effectively save a space inside the box body, thereby improving the space utilization in the box body.

In some embodiments, the sampling unit includes: a sampling unit body; and an occluding portion formed on an outer circumferential surface of the sampling unit body and protruding from the outer circumferential surface of the sampling unit body, where the occluding portion is configured for covering a gap between the sampling unit body and an inner wall of the passage.

In the foregoing technical solution, the sampling unit includes the sampling unit body and the occluding portion which is used for covering the gap between the sampling unit body and the inner wall of the passage. When high-temperature and high-pressure gas is generated in the battery, the occluding portion may effectively avoid flowing of the gas along the gap between the sampling unit and the end plate, thereby reducing the risk of damage of the sampling unit by the high-temperature and high-pressure gas, and avoiding flowing of the high-temperature and high-pressure gas along the gap between the sampling unit and the end plate to affect normal directional discharge of the gas in the battery.

In a second aspect, the present application provides a power consumption apparatus, including the battery described in any of the above solutions, where the battery is configured for providing electrical energy.

In a third aspect, the present application provides a battery manufacturing method, including: providing a box body, where the box body includes a side wall for forming an accommodating cavity by enclosing; providing a battery cell group, where the battery cell group includes a plurality of battery cells, and the plurality of battery cells are arranged in a stack; providing an end plate and an electrical energy lead-out member, where the electrical energy lead-out member includes a first segment, a second segment, and a third segment connected in sequence, the second segment is embedded in the end plate, and the first segment and the third segment extend out from the end plate; disposing the battery cell group inside the accommodating cavity; disposing the end plate and the electrical energy lead-out member inside the accommodating cavity, and positioning the end plate between the battery cell group and the side wall; and connecting electrically the first segment to the battery cell group.

In a fourth aspect, the present application provides a battery manufacturing device, including: a provision module, configured to provide a box body, a battery cell group, an end plate, and an electrical energy lead-out member, where the box body includes a side wall for forming an accommodating cavity by enclosing, the battery cell group includes a plurality of battery cells, the plurality of battery cells are arranged in a stack, the electrical energy lead-out member includes a first segment, a second segment, and a third segment connected in sequence, the second segment is embedded in the end plate, and the first segment and the third segment extend out from the end plate; and an assembly module, configured to dispose the battery cell group inside the accommodating cavity, dispose the end plate and the electrical energy lead-out member inside the accommodating cavity, position the end plate between the battery cell group and the side wall, and electrically connect the first segment to the battery cell group.

### Brief Description of the Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is an exploded view of a battery from a first perspective according to some embodiments of the present application;
FIG. 3 is an exploded view of the battery from a second perspective according to some embodiments of the present application;
FIG. 4 is a partially enlarged view of part A shown in FIG. 2;
FIG. 5 is a partially enlarged view of part B shown in FIG. 3;
FIG. 6 is an axonometric view of an end plate from a first perspective according to some embodiments of the present application;
FIG. 7 is an axonometric view of the end plate from a second perspective according to some embodiments of the present application;
FIG. 8 is a schematic diagram of a state that a sampling unit penetrates the end plate according to some embodiments of the present application;
FIG. 9 is a schematic diagram of a mating structure that the sampling unit penetrates the end plate as shown in FIG. 8;
FIG. 10 is a partial front cross-sectional view of the battery according to some embodiments of the present application;
FIG. 11 is a top view shown in FIG. 10;
FIG. 12 is a schematic structural diagram of the end plate according to some embodiments of the present application;
FIG. 13 is a schematic flowchart of a battery manufacturing method according to some embodiments of the present application; and
FIG. 14 is a schematic block diagram of a battery manufacturing device according to some embodiments of the present application.

The drawings are not drawn to actual scale.

Marking description: 1000 - vehicle; 100 - battery; 10 - battery cell group; 11 - battery cell; 20 - box body; 21 - side wall; 211 - accommodating cavity; 212 - exhaust port; 22 - top wall; 23 - bottom wall; 231 - through hole; 232 - through slot; 30 - end plate; 31 - end plate body; 311 - first surface; 312 - second surface; 32 - first reinforcing rib; 321 - top reinforcing rib; 3211 - first opening; 322 - middle reinforcing rib; 3221 - second opening; 323 - bottom reinforcing rib; 324 - avoidance port; 33 - second reinforcing rib; 34 - passage; 35 - guide passage; 351 - vertical passage; 352 - horizontal passage; 40 - electrical energy lead-out member; 41 - first segment; 42 - second segment; 43 - third segment; 44 - bent angle; 50 - sampling unit; 51 - sampling unit body; 52 - occluding portion; 60 - insulator; 70 - output electrode; 80 - high-voltage distribution box; 90 - pressure relief mechanism; 200 - controller; 300 - motor; 2000 - manufacturing device; 2100 - first provision apparatus; 2200 - second provision apparatus; 2300 - third provision apparatus; 2400 - first assembly apparatus; 2500 - second assembly apparatus; 2600 - third assembly apparatus.

### Detailed Description of Embodiments

In order to make the objectives, technical solutions and advantages of the embodiments of the present application clearer, the technical solutions in the embodiments of the present application will be described clearly and completely below in conjunction with the accompanying drawings in the embodiments of the present application. Apparently, the described embodiments are part of the embodiments of the present application, not all of them. Components in the embodiments of the present application, typically described and shown in the drawings, may be arranged and designed in various different configurations.

Therefore, detailed descriptions of the embodiments of the present application provided in the drawings below are not intended to limit the scope of protection of the present application, but only to represent the selected embodiments of the present application. All other embodiments obtained by those of ordinary skill in the art based on the embodiments of the present application without creative efforts shall fall within the scope of protection of the present application.

The following describes the embodiments of the technical solutions of the present application with reference to the drawings. The following embodiments are only used to illustrate the technical solutions of the present application, and therefore are only examples and cannot be used to limit the scope of protection of the present application.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "include" and "have" and any variations thereof in the specification and claims of the present application as well as the brief description of the drawings described above are intended to cover non-exclusive inclusion.

In the description of the embodiments of the present application, the terms "first", "second", and the like are only used to distinguish different objects and cannot be understood as indicating or implying relative importance or implying the quantity, specific order, or primary and secondary relation of the indicated technical features. In the description of the embodiments of the present application, "a plurality of" means two or more, unless otherwise specified.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "a plurality of" means two (inclusive) or more.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "set", "mounted", "connected", "connection", "fixed", and the like should be understood broadly. For example, the term "connection" may be a fixed connection, a detachable connection, an integration, a mechanical connection, an electrical connection, a direct connection, an indirect connection through a medium, or an internal communication of two elements, or an interaction between two elements. Those of ordinary skill in the art may appreciate the specific meanings of the foregoing terms in the embodiments of the present application to specific circumstances.

In the embodiments of the present application, the same reference numerals represent the same components, and for simplicity, detailed descriptions of the same components are omitted in different embodiments. It should be understood that dimensions such as thickness, length and width of various components and dimensions such as overall thickness, length and width of integrated apparatuses in the embodiments of the present application shown in the drawings are merely illustrative examples and should not constitute any limitations on the present application.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to the way of packaging: cylindrical battery cells, square battery cells, and soft package battery cells, which are not limited in the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery may include a box body for packaging one or more battery cells. The box body may prevent liquid or other foreign matters from affecting the charging or discharging of the battery cells.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like. In addition, the electrode assembly may be of a winding structure or a laminated structure, and the embodiments of the present application are not limited thereto.

At present, based on the development of the market situation, the application of power batteries is increasingly widespread. Power batteries are not only used in energy storage power systems of water power, firepower, wind power and solar power plants and the like, but also widely used in many fields of electric vehicles such as electric bicycles, electric motorcycles, and electric vehicles, military equipment, aerospace, and the like. With the continuous expansion of the application field of power batteries, their market demand is also constantly expanding.

In the prior art, an expansion beam is generally disposed in the front of a box body of a battery to support an end plate, and a sufficient space is required to be reserved between the expansion beam and a frame of the box body of the battery to form a mounting area for an output component of the battery. Low space utilization of the battery in this structure seriously affects improvement on an energy density of the battery.

Based on the above problems, in order to improve the energy density of the battery, the applicant provides a battery. The battery in the present application includes a box body, a battery cell group, an end plate, an electrical energy lead-out member, and/or a sampling unit. The electrical energy lead-out member of the battery is embedded in the end plate, that is, a lead-out unit of the battery is embedded in the end plate. In this case, a wire passing space of the lead-out unit of the battery is not required to be reserved between the end plate and a wall of the box body in the battery, which is beneficial to improving space utilization of the battery, thereby increasing the energy density of the battery. In addition, the electrical energy lead-out member and/or the sampling unit are integrated to the end plate, and the end plate limits and fastens the electrical energy lead-out member and/or the sampling unit, thereby effectively improving connection stability of the electrical energy lead-out member and the sampling unit, reducing the risk of disconnection of the electrical energy lead-out member and the sampling unit due to shaking, vibration, and other reasons, then reducing the risk of accidents such as short circuits and fires caused by the disconnection of the electrical energy lead-out member, and improving performance stability of the battery.

The battery disclosed in the embodiments of the present application may be used, but is not limited to, in a power consumption device such as a vehicle, a ship, or an aircraft. The battery disclosed in the present application may be used to form a power system of the power consumption device, which can effectively prolong a service life of a battery and effectively improve use performance of the battery.

An embodiment of the present application provides a power consumption apparatus using a battery as a power supply. The power consumption apparatus may be, but is not limited to, a mobile phone, a tablet computer, a notebook computer, an electric toy, an electric tool, a scooter, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

The battery described in the embodiments of the present application is not only applicable to the power consumption apparatuses described above, but may also be applicable to all power consumption apparatuses using batteries. However, for the sake of simplicity, the following embodiments are described by an example of a vehicle as a power consumption apparatus in an embodiment of the present application.

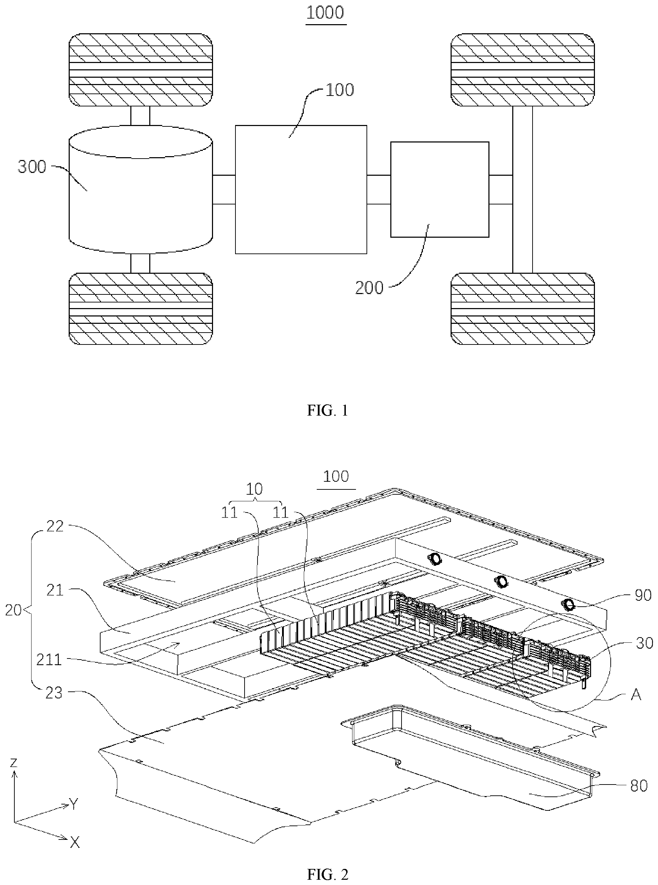

Refer to FIG. 1. FIG. 1 is a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for the working power demand of the vehicle 1000 during startup, navigation and running.

In other embodiments, the battery 100 may be used not only as an operation power supply of the vehicle 1000, but also as a driving power supply of the vehicle 1000 to replace or partially replace fuel or natural gas to provide driving power for the vehicle 1000.

The battery mentioned in the embodiments of the present application refers to a single physical module that includes one or more battery cells to provide a higher voltage and capacity. A plurality of battery cells may be connected in series, parallel, or series and parallel to directly form the battery. The series and parallel connection refers to both series and parallel connection in the plurality of battery cells. A plurality of battery cells may alternatively be first connected in series, parallel, or series and parallel to form a battery cell module, and then a plurality of battery cell modules are connected in series, parallel, or series and parallel to form the battery.

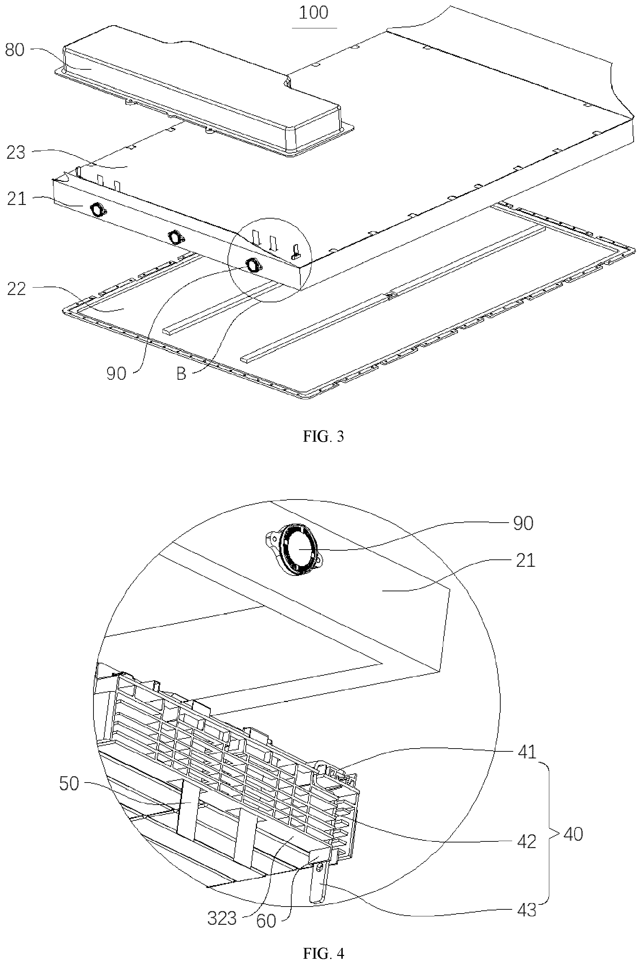

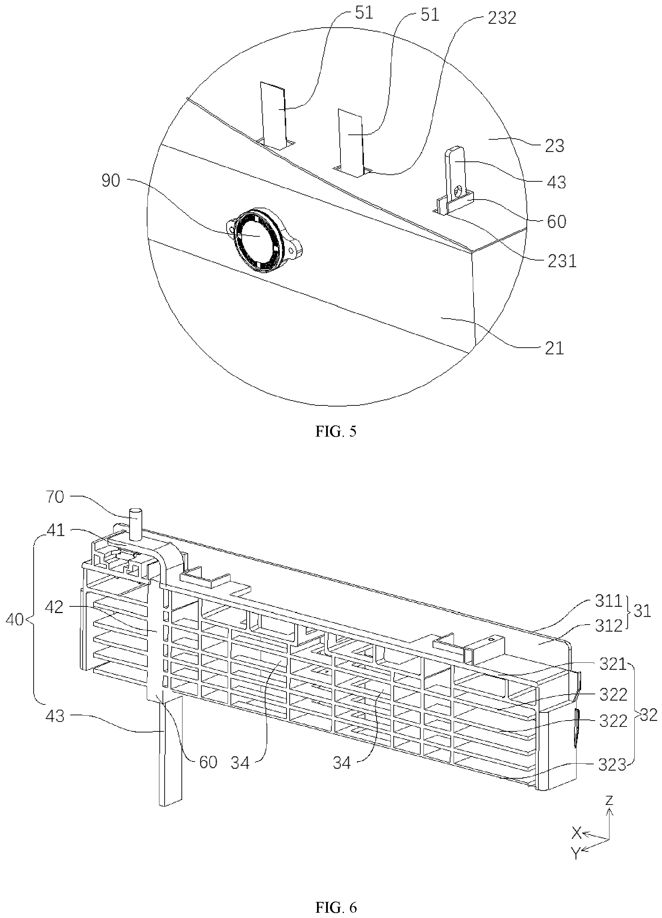

Refer to FIG. 2 and FIG. 3, and further refer to FIG. 4 and FIG. 5, where FIG. 2 is an exploded view of a battery from a first perspective according to some embodiments of the present application, FIG. 3 is an exploded view of the battery from a second perspective according to some embodiments of the present application, FIG. 4 is a partially enlarged view of part A shown in FIG. 2, and FIG. 5 is a partially enlarged view of part B shown in FIG. 3. Some embodiments of the present application provide a battery 100. The battery 100 includes a box body 20, a battery cell group 10, an end plate 30, an electrical energy lead-out member 40, and/or a sampling unit 50. The box body 20 includes a side wall 21 for forming an accommodating cavity 211 by enclosing, the battery cell group 10 is disposed inside the accommodating cavity 211 and includes a plurality of battery cells 11, and the plurality of battery cells 11 are stacked. The end plate 30 is disposed inside the accommodating cavity 211 and located between the battery cell group 10 and the side wall 21. The electrical energy lead-out member 40 is used for leading out electrical energy of the battery cell group 10. The electrical energy lead-out member 40 includes a first segment 41, a second segment 42, and a third segment 43 connected in sequence. The second segment 42 is embedded in the end plate 30, the first segment 41 and the third segment 43 extend out from the end plate 30, and the first segment 41 is electrically connected to the battery cell group 10.

The sampling unit 50 is used for collecting signals from the battery cell group 10, the sampling unit 50 penetrates the end plate 30, and one end of the sampling unit 50 is connected to the battery cell group 10.

The box body 20 is used for providing an accommodating space for the battery cell group 10 to store and protect the battery cell group 10. The box body 20 may be of a square structure, a cylinder, an elliptical cylinder, or the like. The box body 20 includes the side wall 21 for forming the accommodating cavity 211 by enclosing, and the side wall 21 may have many structures according to different shapes of the box body 20. For example, refer to FIG. 2. FIG. 2 is an exploded view of the battery 100 from a first perspective according to some embodiments of the present application. The box body 20 may include a top wall 22, a side wall 21, and a bottom wall 23, where the top wall 22 is opposite to the bottom wall 23, the side wall 21 is disposed at a periphery of the bottom wall 23, and the side wall 21 is of a hollow structure with openings at two ends; an inner cavity of the side wall 21 forms the accommodating cavity 211, and the side wall 21 connects the top wall 22 and the bottom wall 23; and the side wall 21, the top wall 22, and the bottom wall 23 jointly confine an accommodating space that may accommodate the battery cell group 10.

In some embodiments, the top wall 22 and the side wall 21 may be integrated to form a shell, one end of the shell has an opening, the bottom wall 23 is split from the side wall 21, the bottom wall 23 forms a cover structure, and the bottom wall 23 covers the opening of the shell to seal the battery cell group 10 inside the shell.

In other embodiments, the bottom wall 23 and the side wall 21 may alternatively be integrated to form a shell, one end of the shell has an opening, the top wall 22 is split from the side wall 21, the top wall 22 forms a cover structure, and the top wall 22 covers the opening of the shell to seal the battery cell group 10 inside the shell.

For example, as shown in FIG. 2, the box body 20 may include a top wall 22, a bottom wall 23, and a side wall 21, where the side wall 21 forms a shell with openings at two ends, and the bottom wall 23 and the top wall 22 cover the two openings of the shell separately to form a closed space for accommodating the battery cell group 10.

The shell enclosed by the side wall 21 may be rectangular, square, or in other shapes, and the box body 20 may be made of a metal material, such as aluminum, aluminum alloy, or nickel-plated steel. In some embodiments of the present application, the box body 20 may be hexahedral, and the top wall 22 and the bottom wall 23 may be of a square or rectangular plate structure.

Specifically, a width direction of the box body 20 extends in a first direction X, a length direction extends in a second direction Y, and a height direction extends in a third direction Z. In the third direction Z, the top wall 22 is located above the side wall 21, and the bottom wall 23 is located below the side wall 21.

The battery cell group 10 is disposed inside the accommodating cavity 211, the battery cell group 10 includes a plurality of battery cells 11, the plurality of battery cells 11 may be connected in series, parallel, or series and parallel (the series and parallel connection refers to both series connection and parallel connection in the plurality of battery cells 11) to form the battery cell group 10, and the battery cell group 10 is disposed in the accommodating cavity 211 of the box body 20. Of course, the battery 100 may alternatively include a plurality of battery cell groups 10, and the plurality of battery cell groups 10 are then connected in series, parallel, or series and parallel to form the battery 100, that is, a single battery cell group 10 or a plurality of battery cell groups 10 may be disposed inside the accommodating cavity 211. Each battery cell 11 may be a secondary battery 100, a primary battery 100, a lithium-sulfur battery 100, a sodium-ion battery 100, or a magnesium-ion battery 100, but is not limited thereto. The battery cell 11 may be cylindrical, flat, cuboid, or in other shapes.

The end plate 30 is used as a limiting member and fastener for the battery cell group 10, to fasten and limit the plurality of battery cells 11 of the battery cell group 10, and to limit movement of the battery cell group 10 within the box body 20.

A material of the end plate 30 may be a plastic material such as nylon or fiberglass, or a conventional metal material such as aluminum or aluminum alloy. The end plate 30 may be an injection molded member or a die casting member.

In some embodiments of the present application, the plurality of battery cells 11 of the battery cell group 10 are arranged in the length direction (second direction Y) of the box body 20, and end plates 30 are disposed at two ends of the battery cell group 10 in the second direction Y and between the battery cell group 10 and the side wall 21.

The electrical energy lead-out member 40 is used for leading out the electrical energy of the battery cell group 10. It may be understood that the electrical energy lead-out member 40 should have conductivity, and a material of the electrical energy lead-out member 40 may be a metal material with good conductivity.

"The second segment 42 of the electrical energy lead-out member 40 may be embedded in the end plate 30" may be implemented by many structures. For example, the electrical energy lead-out member 40 may be integrally formed with the end plate 30, and the electrical energy lead-out member 40 may alternatively be detachably assembled on the end plate 30. The end plate 30 and the electrical energy lead-out member 40 may be detached in many ways. For example, the end plate 30 may be provided with a clamping groove, and the electrical energy lead-out member 40 may be clamped into the clamping groove and connected to the end plate 30; the electrical energy lead-out member 40 is bonded to the end plate 30 through a glue; or the electrical energy lead-out member 40 is fastened to the end plate 30 through a fastener.

The embodiments of the present application do not limit a quantity of the electrical energy lead-out member 40. One electrical energy lead-out member 40 or a plurality of electrical energy lead-out members 40 may be embedded in one end plate 30.

The sampling unit 50 is used for collecting signals from the battery cell group 10, including but not limited to collecting voltage signals, temperature signals, and other signals from the battery cell group 10. The sampling unit 50 may be connected to a control system of the battery 100 to enable the control system of the battery 100 to collect and monitor information such as voltage and temperature of the battery 100.

It may be understood that the sampling unit 50 penetrates the end plate 30 in many ways, and the sampling unit 50 and the end plate 30 may be movably matched or fixed in relative positions. Specifically, the sampling unit 50 may be integrally formed with the end plate 30, or may be split from the end plate 30 and fixed to the end plate 30 by clamping, screwing, gluing, or the like. Alternatively, the end plate 30 is provided with a passage 34 through which the sampling unit 50 passes, so that the sampling unit 50 penetrates the end plate 30 through the passage 34.

Similarly, the embodiments of the present application do not limit a type and quantity of the sampling unit 50. The battery 100 may include one sampling unit 50 penetrating the end plate 30, or a plurality of sampling units 50 penetrating the end plate 30.

The electrical energy lead-out member 40 of the battery 100 is embedded in the end plate 30, and the sampling unit 50 penetrates the end plate 30, so that a wire passing space is not required to be reserved for the electrical energy lead-out member 40 and the sampling unit 50 between the end plate 30 and a wall of the box body 20 in the battery 100, which is beneficial to improving space utilization of the battery 100, thereby increasing an energy density of the battery 100. In addition, the electrical energy lead-out member 40 and/or the sampling unit 50 are integrated to the end plate 30, and the end plate 30 limits and fastens the electrical energy lead-out member 40 and/or the sampling unit 50, thereby effectively improving connection stability of the electrical energy lead-out member 40 and the sampling unit 50, reducing the risk of disconnection of the electrical energy lead-out member 40 and the sampling unit 50 due to shaking, vibration, and other reasons, then reducing the risk of accidents such as short circuits and fires caused by the disconnection of the electrical energy lead-out member 40, and improving performance stability of the battery 100.

The first segment 41 and the third segment 43 of the electrical energy lead-out member 40 extend out from the end plate 30 to form free connecting ends. Extension directions of the first segment 41 and the third segment 43 from the end plate 30 may be flexibly set according to an overall structure of the battery 100. For example, an extension position of the first segment 41 may be close to an electrical energy output portion of the battery cell group 10, and an extension position of the third segment 43 may be close to a passage 34 disposed on the box body 20 and in communication with the outside of the battery 100.

In some embodiments, the first segment 41 extends out from a top of the end plate 30 to electrically connect with the battery cell group 10, and the third segment 43 extends from a bottom of the end plate 30.

In a conventional battery 100, in order to facilitate assembly and maintenance, a current collecting member of the battery cell group 10 is disposed at a top of the overall structure of the battery 100. In the present application, the first segment 41 of the electrical energy lead-out member 40 extends out from the top of the end plate 30 to shorten a path of electrical connection with the battery cell group 10. In addition, during assembly of the battery 100 in the prior art, the end plate 30 is required to be moved downwards and mounted into the box body 20, and the first segment 41 and the third segment 43 extend out from the top and bottom of the end plate 30 separately, which can effectively avoid interference to the assembly of the end plate 30 and prevent the electrical energy lead-out member 40 from occupying box space of the battery 100.

It may be understood that, in order to lead the electrical energy of the battery cell group 10 out of the battery 100, the third segment 43 of the electrical energy lead-out member 40 may pass through the box body 20 after extending out from the bottom of the end plate 30, so as to lead the electrical energy of the battery cell group 10 out of the battery 100.

In some embodiments, with reference to FIG. 2 and FIG. 5, the box body 20 further includes a bottom wall 23, the side wall 21 is disposed at the periphery of the bottom wall 23, the bottom wall 23 is provided with a through hole 231, and the third segment 43 extends out from the through hole 231 to lead the electrical energy to the outside of the box body 20.

A shape of the through hole 231 may imitate that of a cross section of the third segment 43, and the through hole 231 may be in clearance fit with the third segment 43 or in interference fit with the third segment 43. When the third segment 43 is in interference fit with the through hole 231, the through hole 231 limits and fastens the third segment 43 to further improve the connection stability of the electrical energy lead-out member 40.

It may be understood that the electrical energy lead-out member 40 has conductivity, and when the electrical energy lead-out member 40 is in interference fit with the through hole 231, a wall of the through hole 231 may be made of an insulating material to insulate the electrical energy lead-out member 40 from the box body 20.

The third segment 43 extends out from the through hole 231 on the bottom wall 23 of the box body 20 to lead the electrical energy of the battery 100 to the outside of the box body 20, so as to supply power to a power consumption apparatus. The bottom wall 23 of the box body 20 is provided with the through hole 231 to facilitate passing of the electrical energy lead-out member 40, so as to improve assembly convenience of the battery 100.

In some embodiments, with continued reference to FIG. 5, the battery 100 further includes an insulator 60, and the insulator 60 is disposed between the wall of the through hole 231 and the electrical energy lead-out member 40 to insulate the wall of the through hole 231 from the electrical energy lead-out member 40.

Because the third segment 43 of the electrical energy lead-out member 40 passes through the box body 20 via the through hole 231, the insulator 60 is disposed between the wall of the through hole 231 and the third segment 43 of the electrical energy lead-out member 40. The insulator 60 limits contact between the electrical energy lead-out member 40 and the wall of the through hole 231 to achieve a purpose of insulation between the electrical energy lead-out member 40 and the box body 20.

The insulator 60 may be implemented in many structures. For example, the insulator 60 may be of an independent structure, the insulator 60 may be formed on an outer circumferential surface of the third segment 43 of the electrical energy lead-out member 40 and protrudes from the outer circumferential surface of the third segment 43 of the electrical energy lead-out member 40, relative positions of the insulator 60 and the electrical energy lead-out member 40 are fixed, and after the third segment 43 of the electrical energy lead-out member 40 passes through via the through hole 231, the insulator 60 passes through the through hole 231 and isolates the electrical energy lead-out member element 40 from the wall of the through hole 231.

In other embodiments, the insulator 60 may alternatively be formed on the hole wall, for example, the insulator 60 may be of an annular structure, the insulator 60 passes through the through hole 231 and is fixedly connected to the box body 20, an outer circumferential wall of the insulator 60 abuts against an inner circumferential wall of the through hole 231, the electrical energy lead-out member 40 passes through an inner cavity of the insulator 60, and a circumferential wall of the insulator 60 isolates the electrical energy lead-out member 40 from the wall of the through hole 231.

The insulator 60 may be made of any one or more conventional insulation materials, such as plastic, rubber, and ceramic.

In some embodiments, a gap between the electrical energy lead-out member 40 and the through hole 231 may be sealed by the insulator 60. For example, when the insulator 60 is formed on the outer circumferential surface of the electrical energy lead-out member 40, the outer circumferential surface of the electrical energy lead-out member 40 may be in interference fit with the wall of the through hole 231, so that the insulator 60 isolates the electrical energy lead-out member 40 and the through hole 231 and seals the gap between the electrical energy lead-out member 40 and the through hole 231 synchronously. This structure can prevent impurities from entering the box body 20 of the battery 100 via the gap between the through hole 231 and the electrical energy lead-out member 40, and also prevent high-temperature and high-pressure gas generated in the box body 20 from flowing out of the box body 20 of the battery 100 via the through hole 231 along the electrical energy lead-out member 40.

The insulator 60 may be in clearance fit or interference fit with the through hole 231. When the insulator 60 is in interference fit with the through hole 231, relative positions of the electrical energy lead-out member 40 and the box body 20 can be fixed, but also the gap between the electrical energy lead-out member 40 and the through hole 231 can be sealed.

The insulator 60 is disposed between the wall of the through hole 231 of the box body 20 and the electrical energy lead-out member 40 to form an insulation protection between the box body 20 and the electrical energy lead-out member 40, thereby avoiding a short circuit between the electrical energy lead-out member 40 and the box body 20, and ensuring insulation of the box body 20 to reduce the risk of electric leakage of the box body 20.

In some embodiments, with reference to FIG. 4, the insulator 60 is integrally formed with the end plate 30.

It may be understood that the insulator 60 is disposed between the wall of the through hole 231 and the electrical energy lead-out member 40, the insulator 60 is integrally formed with the end plate 30, and the third segment 43 of the electrical energy lead-out member 40 passes through the insulator 60.

The integral formation of the insulator 60 and the end plate 30 is beneficial to improving assembly convenience of the battery 100. Compared with a split configuration of the insulator 60, the structure of the insulator 60 integrally formed on the end plate 30 has high foolproof performance, and can effectively prevent the risk of missing assembly of the insulator 60 in an assembly process of the battery 100, simplify the assembly process, and reduce an assembly defect rate and a rework rate. In addition, the design of the insulator 60 integrally formed on the end plate 30 achieves a reinforcing and comprehensive insulation protection effect on the electrical energy lead-out member 40, with strong insulation reliability.

In some embodiments, refer to FIG. 6. FIG. 6 is an axonometric view of the end plate 30 from a first perspective according to some embodiments of the present application. The end plate 30 and the electrical energy lead-out member 40 are injection molded into one.

It may be understood that the electrical energy lead-out member 40 includes a first segment 41, a second segment, and a third segment 43 connected in sequence, where the second segment 42 is embedded in the end plate 30. In this embodiment, the end plate 30 and the electrical energy lead-out member 40 are injection molded into one, indicating that the second segment 42 of the electrical energy lead-out member 40 and the end plate 30 are injection molded into one.

Specifically, the end plate 30 should include an injection molding portion, and the injection molding portion of the end plate 30 wraps the second segment 42 of the electrical energy lead-out member 40, so that the end plate 30 and the second segment 42 are injection molded into one. The overall structure of the end plate 30 may be an injection molded member or may be integrally formed by a metal part and an injection molding portion, where the injection molding portion of the end plate 30 wraps the second segment 42.

The electrical energy lead-out member 40 has conductivity, and the electrical energy lead-out member 40 is integrally formed with the end plate 30 by injection molding, to facilitate the injection molding portion of the end plate 30 to directly insulate and protect the electrical energy lead-out member 40, thereby avoiding a short circuit of the electrical energy lead-out member 40. In addition, the end plate 30 plays a firm limiting role on the electrical energy lead-out member 40, to further improve connection stability of the electrical energy lead-out member 40. Meanwhile, after the integral injection molding, the junction between the electrical energy lead-out member 40 and the end plate 30 is sealed. When high-temperature and high-pressure gas is generated in the battery 100, the gas cannot directly impact the electrical energy lead-out member 40, thereby effectively avoiding the risk of short circuits and fires in the battery 100 due to melting of the electrical energy lead-out member 40 by the high-temperature and high-pressure gas, and improving safety performance of the battery 100.

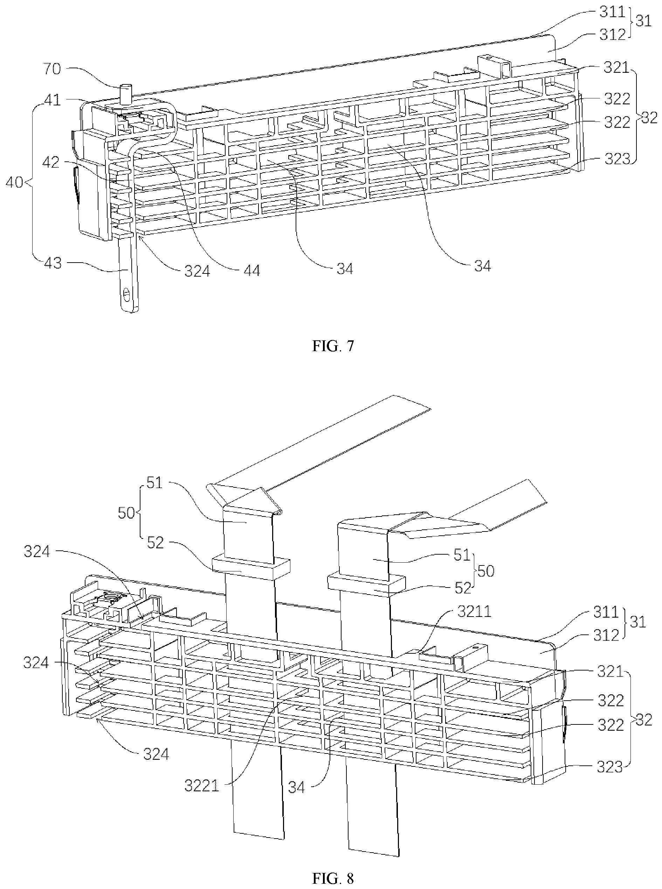

In some embodiments, refer to FIG. 8. FIG. 8 is a schematic diagram of a state that the sampling unit 50 penetrates the end plate 30 according to some embodiments of the present application. The electrical energy lead-out member 40 is detachably connected to the end plate 30, and the electrical energy lead-out member 40 is bent at least twice in an extension direction of the electrical energy lead-out member 40.

As mentioned earlier, the end plate 30 and the electrical energy lead-out member 40 may be detached in many ways. For example, the end plate 30 may be provided with a clamping groove, and the electrical energy lead-out member 40 may be clamped into the clamping groove and connected to the end plate 30; the electrical energy lead-out member 40 is bonded to the end plate 30 through a glue; or the electrical energy lead-out member 40 is fastened to the end plate 30 through a fastener.

Due to the detachable connection between the electrical energy lead-out member 40 and the end plate 30, a gap necessarily exists at the junction between the electrical energy lead-out member 40 and the end plate 30. When high-temperature and high-pressure gas is generated in the battery 100, the high-temperature and high-pressure gas may flow along the electrical energy lead-out member 40 via the gap between the end plate 30 and the electrical energy lead-out member 40, thereby posing the risk of melting of the electrical energy lead-out member 40 by the high-temperature and high-pressure gas to cause great potential safety hazards.

In this embodiment, the electrical energy lead-out member 40 is bent at least twice, so that the extension direction of the electrical energy lead-out member 40 changes at least twice. By changing the extension direction of the electrical energy lead-out member 40, the risk of gas flow along the electrical energy lead-out member 40 is effectively reduced.

The electrical energy lead-out member 40 may be bent multiple times, including two, three, four, or even more times. For example, with reference to FIG. 7, the electrical energy lead-out member 40 is bent twice.

The electrical energy lead-out member 40 is detachably connected to the end plate 30, and the end plate 30 and the electrical energy lead-out member 40 may be produced separately before assembly, which is beneficial to reducing process difficulty and production costs. The structure of the electrical energy lead-out member 40 bent at least twice enables the electrical energy lead-out member 40 to have at least two bent angles 44, that is, changes the extension direction of the electrical energy lead-out member 40 twice. When high-temperature and high-pressure gas is generated in the battery 100, the bending of the electrical energy lead-out member 40 is beneficial to increasing gas flow resistance and preventing gas from flowing along the gap between the electrical energy lead-out member 40 and the end plate 30 and a flow channel of the electrical energy lead-out member 40, thereby effectively avoiding the risk of short circuits and fires in the battery 100 due to the melting of the electrical energy lead-out member 40 by the high-temperature and high-pressure gas, and improving the safety performance of the battery 100.

In some embodiments, the bent angle 44 of the electrical energy lead-out member 40 is 40° to 130°. That is, the electrical energy lead-out member 40 is bent to form a bent angle 44, and the bent angle 44 is 40° to 130°. In some embodiments, the bent angle 44 of the electrical energy lead-out member 40 is 75° to 100°.

For example, as shown in FIG. 7, the bent angle 44 of the electrical energy lead-out member 40 is 90°.

A conductive metal is generally used as the electrical energy lead-out member 40 in the battery 100. A too small bent angle 44 easily affects structural strength of the electrical energy lead-out member 40 to cause a risk of breakage of the electrical energy lead-out member 40, while a too large bent angle 44 cannot form an effective blocking effect on airflow. In this embodiment, the bent angle 44 of the electrical energy lead-out member 40 is controlled between 40° and 130°, so as to ensure the structural strength of the electrical energy lead-out member 40 and achieve a good blocking effect on the high-temperature and high-pressure gas. Controlling the bent angle 44 of the electrical energy lead-out member 40 between 75° and 100° can further improve the blocking effect on the high-temperature and high-pressure gas.

In some embodiments, with continued reference to FIG. 6 and FIG.7, the end plate 30 includes an end plate body 31 and a plurality of first reinforcing ribs 32, the end plate body 31 has a first surface 311 facing the battery cell group 10 and a second surface 312 facing away from the battery cell group 10, and the first surface 311 abuts against the battery cell group 10. The plurality of first reinforcing ribs 32 are formed on the second surface 312 and abut against the side wall 21, and the plurality of first reinforcing ribs 32 are spaced up and down. The second segment 42 penetrates the plurality of first reinforcing ribs 32.

The first reinforcing ribs 32 function to improve structural strength of the end plate body 31. The first reinforcing rib 32 may be similar to a strip structure or a plate structure, or may be a planar structure or a curved structure. For example, as shown in FIG. 6, the first reinforcing rib 32 is a planar plate structure. The first reinforcing ribs 32 and the end plate body 31 may be integrally formed or assembled by welding, screw connection, or the like.

In some embodiments, the end plate 30 may further include a plurality of second reinforcing ribs 33, the plurality of second reinforcing ribs 33 are formed on the second surface 312 and abut against the side wall 21, the plurality of second reinforcing ribs 33 and the plurality of first reinforcing ribs 32 are disposed in a cross manner, and each second reinforcing rib 33 extends in a vertical direction.

Similar to the first reinforcing rib 32, the second reinforcing rib 33 may be similar to a strip structure or a plate structure, or may be a planar structure or a curved structure. For example, as shown in FIG. 6 and FIG. 7, based on the implementation form that the first reinforcing rib 32 is the planar plate structure, the second reinforcing rib 33 is also a planar plate structure.

The end plate 30 includes the first reinforcing ribs 32 and the second reinforcing ribs 33 crossing the first reinforcing ribs 32, where the first reinforcing ribs 32 and the second reinforcing ribs 33 form a mesh structure, which is conducive to further improving the structural strength of the end plate 30.

It may be understood that the second segment 42 penetrates the plurality of first reinforcing ribs 32, and positions of the plurality of first reinforcing ribs 32 at least in contact with the second segment 42 are made of an insulating material to ensure insulation between the electrical energy lead-out member 40 and the end plate 30. To simplify a production process, the first reinforcing ribs 32 may all be made of an insulating material, and even the first reinforcing ribs 32 and the end plate body 31 are made of insulating materials.

Based on the implementation form that "the end plate 30 and the electrical energy lead-out member 40 are injection molded into one", the electrical energy lead-out member 40 may be integrally formed with the plurality of first reinforcing ribs 32.

Based on the implementation form that "the electrical energy lead-out member 40 is detachably connected to the end plate 30", the electrical energy lead-out member 40 may be detachably connected to the plurality of first reinforcing ribs 32.

The end plate 30 includes the end plate body 31 and the reinforcing ribs formed on the end plate body 31, where the reinforcing ribs effectively improve the structural strength of the end plate 30 and improve deformation resistance of the end plate 30. Meanwhile, compared with increasing an overall thickness of the end plate 30 to improve the strength of the end plate 30, the reinforcing ribs ensure the structural strength of the end plate 30 and reduce overall weight and material loss of the end plate 30, thereby reducing weight and material costs of the battery 100.

Moreover, the electrical energy lead-out member 40 penetrates the plurality of first reinforcing ribs 32 to reduce assembly difficulty of the electrical energy lead-out member 40 and the end plate 30. In the implementation mode of "the electrical energy lead-out member 40 is detachably connected to the end plate 30", the plurality of first reinforcing ribs 32 form a plurality of limit portions for the electrical energy lead-out member 40 to fix and bend the electrical energy lead-out member 40. In addition, the electrical energy lead-out member 40 penetrates the plurality of first reinforcing ribs 32 to facilitate intuitive observation of a state of the electrical energy lead-out member 40 on the end plate 30 for easy maintenance.

In some embodiments, refer to FIG. 7. FIG. 7 is an axonometric view of the end plate 30 from a second perspective according to some embodiments of the present application. The electrical energy lead-out member 40 is detachably disposed on the end plate 30, and each first reinforcing rib 32 is provided with an avoidance port 324 for avoiding the electrical energy lead-out member 40.

Each first reinforcing rib 32 is provided with the avoidance port 324 for avoiding the electrical energy lead-out member 40, the electrical energy lead-out member 40 passes through the avoidance port 324 of each first reinforcing rib 32 during assembly, and the electrical energy lead-out member 40 may be assembled on the end plate 30, whereby assembly difficulty is reduced. In addition, misalignment of the avoidance ports 324 enables the electrical energy lead-out member 40 to have a bent angle, with easy implementation and strong practicality.

In other embodiments, the electrical energy lead-out member 40 may alternatively penetrate the end plate 30 through a mounting passage disposed on the first reinforcing ribs 32. Specifically, each first reinforcing rib 32 may be provided with an opening, and a plurality of openings are in communication with each other to form the mounting passage that penetrates the plurality of first reinforcing ribs 32. The second segment 42 of the electrical energy lead-out member 40 passes through the mounting passage, so that the electrical energy lead-out member 40 penetrates the end plate 30.

In some embodiments, the electrical energy lead-out member 40 may include a body of the electrical energy lead-out member 40 and a flange formed on an outer circumferential surface of the body of the electrical energy lead-out member 40 and protruding from the outer circumferential surface of the body. After the second segment 42 passes through the mounting passage, the flange is used for covering the gap between the opening and the electrical energy lead-out member. The flange limits the position of the electrical energy lead-out member 40 in the mounting passage, and can block flowing of the high-temperature and high-pressure gas inside the battery 100 along the mounting passage, so as to avoid damage of the electrical energy lead-out member 40 by the high-temperature and high-pressure gas.

In some embodiments, the battery 100 may further include an output electrode 70, one end of the output electrode 70 is electrically connected to the battery cell group 10 to output the electrical energy of the battery cell group 10, and the other end of the output electrode 70 is electrically connected to the first segment 41.

The output electrode 70 may be disposed on the end plate 30 or another structure in the battery 100. For example, as shown in FIG. 6 and FIG. 7, the output electrode 70 is disposed on the top reinforcing rib 321. The first segment 41 of the electrical energy lead-out member 40 may be connected to the output electrode 70 by screw connection, welding, or the like.

The battery 100 is provided with the output electrode 70, and the output electrode 70 is connected to the battery cell group 10 and the electrical energy lead-out member 40, so as to improve a modular assembly level of the battery 100 and facilitate maintenance of the battery 100.

In some embodiments, with reference to FIG. 2 and FIG. 3 again, the battery 100 may further include a high-voltage distribution box 80, the high-voltage distribution box 80 is disposed outside the box body 20, and the third segment 43 extends out of the box body 20 to connect with the high-voltage distribution box 80.

It may be understood that the high-voltage distribution box 80 may be fixed to an outer wall of the box body 20 by screw connection, riveting, welding, or the like. In some embodiments, the high-voltage distribution box 80 may be sealed and connected to the bottom wall 23 of the box body 20, an inner cavity of the high-voltage distribution box 80 is in communication with the through hole 231 on the bottom wall 23 of the box body 20, and the electrical energy lead-out member 40 extends out of the box body 20 via the through hole 231 and then directly enters the inner cavity of the high-voltage distribution box 80, thereby ensuring sealing of the box body 20.

The third segment 43 of the electrical energy lead-out member 40 extends out of the box body 20 to connect with the high-voltage distribution box 80, and the high-voltage distribution box 80 plays a role in protecting a system of the power battery 100 and transmitting and distributing power in charging and discharging processes of the battery 100.

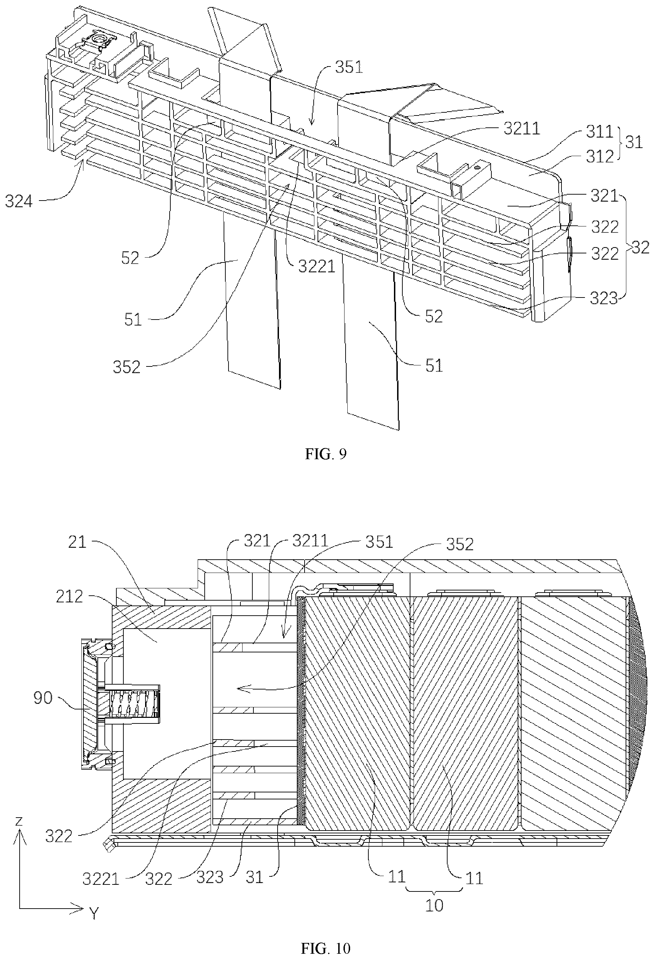

In some embodiments, refer to FIG. 8 and FIG. 9, where FIG. 8 is a schematic diagram of a state that the sampling unit 50 penetrates the end plate 30 according to some embodiments of the present application, and FIG. 9 is a schematic diagram of a mating structure that the sampling unit 50 penetrates the end plate 30 as shown in FIG. 8. The end plate 30 is provided with the passage 34 through which the sampling unit 50 passes, and the passage 34 penetrates the end plate 30 and extends from the top to bottom of the end plate 30.

The end plate 30 is provided with the passage 34, and the sampling unit 50 passes through the passage 34 and is limited in the end plate 30, where the sampling unit 50 can be simply and quickly integrated and limited in the end plate 30 without changing the structure of the sampling unit 50, so the operation is simple and easy to implement, and the sampling unit 50 can be flexibly increased, decreased, and adjusted, with strong practicality.

In some embodiments, one end of the sampling unit 50 extends out from the top of the end plate 30 to connect with the battery cell group 10, and the other end of the sampling unit 50 extends out from the bottom of the end plate 30 and passes through the box body 20 to lead signals to the outside of the box body 20.

Based on the implementation form that "the end plate 30 includes an end plate body 31 and a plurality of first reinforcing ribs 32", the passage 34 may penetrate the plurality of first reinforcing ribs 32, so that one end of the sampling unit 50 extends out from the top reinforcing rib 321 to connect with the battery cell group 10, and the other end of the sampling unit 50 extends out from the bottom reinforcing rib 323 and passes through the box body 20 to lead signals to the outside of the box body 20.

Meanwhile, the other end of the sampling unit 50 passing from the box body 20 may be directly connected to a control system of the power consumption apparatus or a separate control system configured for the battery 100.

It may be understood that, with reference to FIG. 5 again, a through slot 232 through which the sampling unit 50 passes may be disposed on the bottom wall 23 of the box body 20, and the other end of the sampling unit 50 passes through the bottom wall 23 of the box body 20 from the through slot 232.

In some embodiments, based on the implementation form that "the battery 100 includes a high-voltage distribution box 80, the high-voltage distribution box 80 is disposed outside the box body 20, and the third segment 43 extends out of the box body 20 to connect with the high-voltage distribution box 80", the control system of the battery 100 may be integrated into a box body of the high-voltage distribution box 80, that is, the third segment 43 of the electrical energy lead-out member 40 and one end of the sampling unit 50 are connected to the box body of the high-voltage distribution box 80 after passing through the box body 20.

Similarly, the high-voltage distribution box 80 may be sealed and connected to the bottom wall 23 of the box body 20, the inner cavity of the high-voltage distribution box 80 may be in communication with the through slot 232 through which the sampling unit 50 passes on the bottom wall 23 of the box body 20, and the sampling unit 50 extends out of the box body 20 via the through slot 232 and then directly enters the inner cavity of the box body of the high-voltage distribution box 80, thereby ensuring sealing of the box body 20.

In some embodiments, an insulating structure may alternatively be disposed between the sampling unit 50 and a wall of the through slot 232 of the box body 20. Similar to the insulator 60 between the electrical energy lead-out member 40 and the through hole 231, the insulating structure of the sampling unit 50 may be fixed to the sampling unit 50 or cover the wall of the through slot 232. The insulating structure and material of the sampling unit 50 may refer to the implementation structure of the insulator 60 of the electrical energy lead-out member 40, and will not be repeated here.

In some embodiments, a sealing member may be disposed at the junction between the sampling unit 50 and the box body 20 to achieve a sealed connection between the sampling unit 50 and the box body 20.

In some embodiments, the sampling unit 50 includes a sampling unit body 51 and an occluding portion 52, the occluding portion 52 is formed on an outer circumferential surface of the sampling unit body 51 and protrudes from the outer circumferential surface of the sampling unit body 51, and the occluding portion 52 is used for covering a gap between the sampling unit body 51 and an inner wall of the passage 34.

For example, as shown in FIG. 8 and FIG. 9, one end of the sampling unit 50 extends out from the top reinforcing rib 321 to connect with the battery cell group 10, and the occluding portion 52 is located above the top reinforcing rib 321. After the sampling unit 50 passes through the plurality of first reinforcing ribs 32, the occluding portion 52 covers a gap between the sampling unit body 51 and the top reinforcing rib 321.

When high-temperature and high-pressure gas is generated in the battery 100, the occluding portion 52 may effectively avoid flowing of the gas along the gap between the sampling unit 50 and the end plate 30, thereby reducing the risk of damage of the sampling unit 50 by the high-temperature and high-pressure gas, and avoiding flowing of the high-temperature and high-pressure gas in the box body 20 along the gap between the sampling unit 50 and the end plate 30 to affect normal directional discharge of the gas in the battery 100.

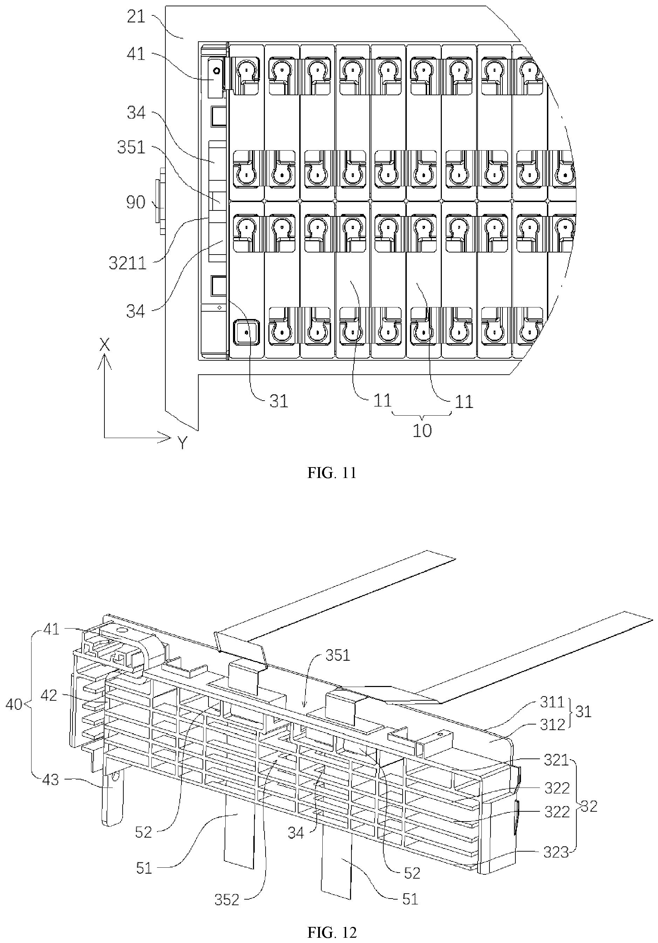

According to some embodiments of the present application, continue to refer to FIG. 8 and FIG. 9, and further refer to FIG. 10 and FIG. 11, where FIG. 10 is a partial front cross-sectional view of the battery 100 according to some embodiments of the present application, and FIG. 11 is a top view shown in FIG. 10. The battery 100 may further include an exhaust port 212 and a guide passage 35.

Specifically, the side wall 21 of the box body 20 is provided with the exhaust port 212, the guide passage 35 is disposed on the end plate 30, and the guide passage 35 is in communication with the exhaust port 212 and the accommodating cavity 211. This structure can ensure exhaust smoothness of the battery 100 after improving space utilization in the box body 20 of the battery 100, and provides directional guidance for the exhaust of the battery 100 to improve exhaust controllability.

In some embodiments, the guide passage 35 may include a vertical passage 351 and a horizontal passage 352, an upper end of the vertical passage 351 is in communication with the accommodating cavity 211, one end of the horizontal channel 352 in the thickness direction of the end plate 30 is in communication with the vertical passage 351, and the other end is in communication with the exhaust port 212.

Because the upper end of the vertical passage 351 is in communication with the accommodating cavity 211, the upper end of the end plate 30 corresponds to an incoming gas direction when the gas is discharged out of the box body 20. On this basis, in the implementation form that "the electrical energy lead-out member 40 is detachably disposed on the end plate 30, each first reinforcing rib 32 is provided with an avoidance port 324 for avoiding the electrical energy lead-out member 40, and the electrical energy lead-out member 40 is bent at least twice in an extension direction of the electrical energy lead-out member 40", the avoidance port 324 of the top reinforcing rib 321 and the avoidance port 324 of the middle reinforcing rib 322 adjacent to the top reinforcing rib 321 may be staggered, so that the electrical energy lead-out member 40 is bent when passing through the top reinforcing rib 321 to block gas from upper reaches of gas flow.

Based on the implementation mode that "the end plate 30 includes an end plate body 31 and a plurality of first reinforcing ribs 32, the end plate body 31 has a first surface 311 facing the battery cell group 10 and a second surface 312 facing away from the battery cell group 10, the first surface 311 abuts against the battery cell group 10, the plurality of first reinforcing ribs 32 are formed on the second surface 312 and abut against the side wall 21, and the plurality of first reinforcing ribs 32 are spaced up and down", the plurality of first reinforcing ribs 32 may include a top reinforcing rib 321, middle reinforcing ribs, and a bottom reinforcing rib 323; and the vertical passage 351 may penetrate at least the top reinforcing rib 321 in the vertical direction, the horizontal passage 352 is formed between two adjacent first reinforcing ribs 32, the upper end of the vertical passage 351 is in communication with an exhaust gap, and the horizontal passage 352 connects the vertical passage 351 and the exhaust port 212.

"The vertical passage 351 penetrates at least the top reinforcing rib 321, and the horizontal passage 352 is formed between the two adjacent first reinforcing ribs 32" indicates that the guide passage 35 may be implemented by many structures, where the vertical passage 351 may penetrate only the top reinforcing rib 321, and the horizontal passage 352 is formed between the top reinforcing rib 321 and the middle reinforcing rib 322 adjacent to the top reinforcing rib 321; the vertical passage 351 may penetrate the top reinforcing rib 321 and some middle reinforcing ribs 322 sequentially adjacent to the top reinforcing rib 321, and the horizontal passage 352 is formed between the top reinforcing rib 321 in communication with the vertical passage 351 and any two first reinforcing ribs 32 among the middle reinforcing ribs 322; or the vertical passage 351 may penetrate the top reinforcing rib 321 and all the middle reinforcing ribs 322, and the horizontal passage 352 is formed between any two adjacent first reinforcing ribs 32 between the top reinforcing rib 321 and the bottom reinforcing rib 323.

For example, the vertical passage 351 penetrates the top reinforcing rib 321 and all the middle reinforcing ribs 322, and the horizontal passage 352 is formed between any two adjacent first reinforcing ribs 32 between the top reinforcing rib 321 and the bottom reinforcing rib 323.

In some embodiments, as shown in FIG. 9 and FIG. 10, the top reinforcing rib 321 is provided with a first opening 3211, the middle reinforcing rib 322 is provided with a second opening 3221, the first opening 3211 is in communication with the second opening 3221 to form the vertical passage 351, and an area of the first opening 3211 is greater than that of the second opening 3221.

Shapes of the first opening 3211 and the second opening 3221 may be diverse, such as rectangular, circular, or elliptical. The shapes of the first opening 3211 and the second opening 3221 may be the same or different. In the vertical direction, a projection of the second opening 3221 may completely fall into a projection of the first opening 3211, or a projection of the second opening 3221 may partially fall into a projection of the first opening 3211.

For example, with reference to FIG. 9, the first opening 3211 and the second opening 3221 are both rectangular, and the projection of the second opening 3221 completely falls into the projection of the first opening 3211.

The top reinforcing rib 321 is provided with the larger first opening 3211, where the first opening 3211 can collect gas and guide the gas quickly into the vertical passage 351.

Based on the implementation form that "the end plate 30 further includes a plurality of second reinforcing ribs 33 which are formed on the second surface 312 and abut against the side wall 21, the plurality of second reinforcing ribs 33 and the plurality of first reinforcing ribs 32 are disposed in a cross manner, and each second reinforcing rib 33 extends in a vertical direction", the vertical passage 351 may be located between any two adjacent second reinforcing ribs 33 or cross one or more second reinforcing ribs 33.

In some embodiments, as shown in FIG. 9, the vertical passage 351 is located between two adjacent second reinforcing ribs 33.

The vertical passage 351 is disposed between the two adjacent second reinforcing ribs 33, and the two adjacent second reinforcing ribs 33 intercept and limit horizontal flowing of gas, so as to further improve the gas guiding effect of the guide passage 35.

In some embodiments, as shown in FIG. 10, the battery 100 may further include a pressure relief mechanism 90, the pressure relief mechanism 90 is disposed on the side wall 21, one end of the pressure relief mechanism 90 is in communication with the exhaust port 212, and the pressure relief mechanism 90 is configured to release internal pressure when the internal pressure of the battery 100 reaches a threshold.

The pressure relief mechanism 90 may be implemented by many structures. The pressure relief mechanism 90 may be an explosion-proof valve mounted on the side wall 21 and in communication with the exhaust port 212, a balance valve mounted on the side wall 21 and in communication with the exhaust port 212, or a structural weak area disposed on the side wall 21 of the box body 20. Of course, the structural weak area may be integrally formed with the side wall 21 of the box body 20, or may be split from the side wall 21 of the box body 20. For example, a carrier having a structural weak area is disposed separately, a mounting portion for the carrier is reserved on the side wall 21 of the box body 20, and the carrier carrying the weak area is mounted on the mounting portion of the side wall 21.

The battery 100 is provided with the pressure relief mechanism 90 in communication with the exhaust port 212, where the pressure relief mechanism 90 effectively controls discharge frequency of the battery 100. When the pressure relief mechanism 90 is in a non-brake state, impurities such as dust and water stains can be prevented from entering the box body 20 via the exhaust port 212.

It may be understood that relative positions of the electrical energy lead-out member 40, the guide passage 35, and the sampling unit 50 on the end plate 30 may be flexibly configured according to actual different connection positions of the battery 100.

For example, refer to FIG. 12. FIG. 12 is a schematic structural diagram of the end plate 30 according to some embodiments of the present application. On the same end plate 30, one guide passage 35 is disposed, two sampling units 50 penetrate, and one electrical energy lead-out member 40 is embedded. The two sampling units 50 are limited in the end plate 30 at interval, the guide passage 35 is located between the two sampling units 50, and the electrical energy lead-out member 40 is located on one side of the two sampling units 50.

According to some embodiments of the present application, with reference to FIG. 2 to FIG. 11, the present application provides a battery 100. The battery 100 includes a box body 20, a battery cell group 10, an end plate 30, and an electrical energy lead-out member 40. The box body 20 includes a bottom wall 23 and a side wall 21, the side wall 21 is disposed at a periphery of the bottom wall 23, the bottom wall 23 is provided with a through hole 231, and the side wall 21 forms an accommodating cavity 211 by enclosing. The battery cell group 10 is disposed inside the accommodating cavity 211 and includes a plurality of battery cells 11, and the plurality of battery cells 11 are stacked; and the end plate 30 is disposed inside the accommodating cavity 211 and located between the battery cell group 10 and the side wall 21, the end plate 30 includes an end plate body 31 and a plurality of first reinforcing ribs 32, the end plate body 31 has a first surface 311 facing the battery cell group 10 and a second surface 312 facing away from the battery cell group 10, the first surface 311 abuts against the battery cell group 10, the plurality of first reinforcing ribs 32 are formed on the second surface 312 and abut against the side wall 21, and the plurality of first reinforcing ribs 32 are spaced up and down.

The electrical energy lead-out member 40 is used for leading out electrical energy of the battery cell group 10, and the electrical energy lead-out member 40 includes a first segment 41, a second segment 42, and a third segment 43 connected in sequence, where the second segment 42 penetrates the plurality of first reinforcing ribs 32 and is integrally formed with the plurality of first reinforcing ribs 32, and the second segment 42 penetrates the plurality of first reinforcing ribs 32. The first segment 41 extends out from a top of the plurality of first reinforcing ribs 32 and is electrically connected to the battery cell group 10, and the third segment 43 extends out from a bottom of the plurality of first reinforcing ribs 32 and extends out from the through hole 231 of the bottom wall 23 to lead the electrical energy to the outside of the box body 20.

According to some embodiments of the present application, the present application further provides a power consumption apparatus, including the battery 100 according to any of the foregoing solutions, where the battery 100 is used for providing electrical energy to the power consumption apparatus.

The power consumption apparatus may be any of the foregoing devices or systems that use the battery 100.

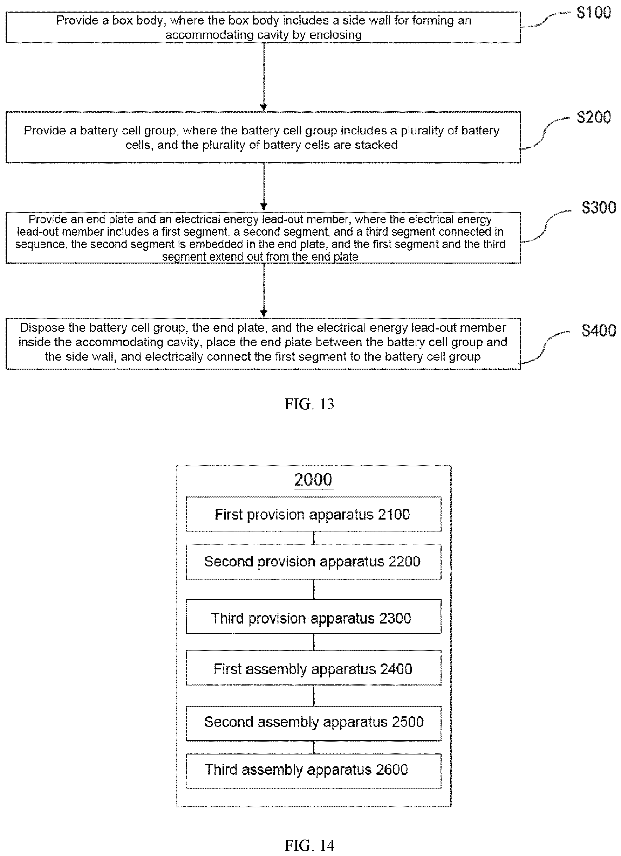

An embodiment of the present application further provides a manufacturing method for a battery 100. Refer to FIG. 13. FIG. 13 is a flowchart of a manufacturing method for a battery 100 according to some embodiments of the present application. The manufacturing method includes:
S100: Provide a box body 20, where the box body 20 includes a side wall 21 for forming an accommodating cavity 211 by enclosing;
S200: Provide a battery cell group 10, where the battery cell group 10 includes a plurality of battery cells 11, and the plurality of battery cells 11 are stacked;
S300: Provide an end plate 30 and an electrical energy lead-out member 40, where the electrical energy lead-out member 40 includes a first segment 41, a second segment 42, and a third segment 43 connected in sequence, the second segment 42 is embedded in the end plate 30, and the first segment 41 and the third segment 43 extend out from the end plate 30; and
S400: Dispose the battery cell group 10, the end plate 30, and the electrical energy lead-out member 40 inside the accommodating cavity 211, place the end plate 30 between the battery cell group 10 and the side wall 21, and electrically connect the first segment 41 to the battery cell group 10.

It should be noted that relevant structures of the battery 100 manufactured by the manufacturing method provided in the foregoing embodiment may be referenced to the battery 100 provided in each foregoing embodiment, and will not be repeated here.

An embodiment of the present application further provides a manufacturing device 2000 for a battery 100. Refer to FIG. 14. FIG. 14 is a schematic block diagram of a manufacturing device 2000 for a battery 100 according to some embodiments of the present application. The manufacturing device 2000 includes a provision module and an assembly module, where the provision module may include a first provision apparatus 2100, a second provision apparatus 2200, and a third provision apparatus 2300; and the assembly module may include a first assembly apparatus 2400, a second assembly apparatus 2500, and a third assembly apparatus 2600.

The first provision apparatus 2100 is configured to provide a box body 20, where the box body 20 includes a side wall 21 for forming an accommodating cavity 211 by enclosing. The second provision apparatus 2200 is configured to provide a battery cell group 10, where the battery cell group 10 includes a plurality of battery cells 11, and the plurality of battery cells 11 are stacked. The third provision apparatus 2300 is configured to provide an end plate 30 and an electrical energy lead-out member 40, where the electrical energy lead-out member 40 includes a first segment 41, a second segment 42, and a third segment 43 connected in sequence, the second segment 42 is embedded in the end plate 30, and the first segment 41 and the third segment 43 extend out from the end plate 30. The first assembly apparatus 2400 is configured to dispose the battery cell group 10 inside the accommodating cavity 211. The second assembly apparatus 2500 is configured to dispose the end plate 30 and the electrical energy lead-out member 40 inside the accommodating cavity 211, and place the end plate 30 between the battery cell group 10 and the side wall 21. The third assembly apparatus 2600 is configured to electrically connect the first segment 41 to the battery cell group 10.

It should be noted that relevant structures of the battery 100 manufactured by the manufacturing device 2000 provided in the foregoing embodiment may be referenced to the battery 100 provided in each foregoing embodiment, and will not be repeated here.

It should be noted that the features in the embodiments of the present application may be combined with each other on a non-conflict basis.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery, comprising:
a box body, comprising a side wall for forming an accommodating cavity by enclosing;
a battery cell group, disposed inside the accommodating cavity and comprising a plurality of battery cells, wherein the plurality of battery cells are arranged in a stack;
an end plate, disposed inside the accommodating cavity and located between the battery cell group and the side wall;
an electrical energy lead-out member, configured for leading out electrical energy of the battery cell group, wherein the electrical energy lead-out member comprises a first segment, a second segment, and a third segment connected in sequence, the second segment is embedded in the end plate, the first segment and the third segment extend out from the end plate, and the first segment is electrically connected to the battery cell group; and/or
a sampling unit, configured for collecting signals of the battery cell group, wherein the sampling unit penetrates the end plate, and one end of the sampling unit is connected to the battery cell group.

2. The battery according to claim 1, wherein the first segment extends out from a top of the end plate to electrically connect with the battery cell group.

3. The battery according to claim 1 or 2, wherein the third segment extends out from a bottom of the end plate.

4. The battery according to claim 3, wherein the box body further comprises a bottom wall, the side wall is disposed at a periphery of the bottom wall, the bottom wall is formed with a through hole, and the third segment extends out from the through hole to lead the electrical energy to an outside of the box body.

5. The battery according to claim 4, wherein the battery further comprises:
an insulator, wherein the insulator is disposed between a wall of the through hole and the electrical energy lead-out member, so as to insulate the wall of the through hole from the electrical energy lead-out member.

6. The battery according to claim 5, wherein the insulator is integrally formed with the end plate.

7. The battery according to any one of claims 1-6, wherein the end plate and the electrical energy lead-out member are injection molded into one piece.

8. The battery according to any one of claims 1-6, wherein the electrical energy lead-out member is detachably connected to the end plate, and the electrical energy lead-out member is bent at least twice in an extension direction of the electrical energy lead-out member.

9. The battery according to claim 8, wherein a bent angle of the electrical energy lead-out member is 40° to 130°.

10. The battery according to any one of claims 1-9, wherein the end plate comprises:
an end plate body, having a first surface facing the battery cell group and a second surface facing away from the battery cell group, wherein the first surface abuts against the battery cell group; and
a plurality of first reinforcing ribs, formed on the second surface and abutting against the side wall, wherein the plurality of first reinforcing ribs are arranged at intervals up and down, and wherein
the second segment penetrates the plurality of first reinforcing ribs.

11. The battery according to claim 10, wherein the electrical energy lead-out member is detachably disposed on the end plate, and each of the first reinforcing ribs is provided with an avoidance port for avoiding the electrical energy lead-out member.

12. The battery according to any one of claims 1-11, wherein the battery further comprises:
an output electrode, wherein one end of the output electrode is electrically connected to the battery cell group, so as to output the electrical energy of the battery cell group, and the other end of the output electrode is electrically connected to the first segment.

13. The battery according to any one of claims 1-12, wherein the battery further comprises:
a high-voltage distribution box disposed outside the box body, wherein the third segment extends out of the box body to connect with the high-voltage distribution box.

14. The battery according to any one of claims 1-13, wherein the end plate is provided with a passage for the sampling unit to pass through, and the passage penetrates the end plate and extends from top to bottom of the end plate.

15. The battery according to claim 14, wherein one end of the sampling unit extends out from the top of the end plate to connect with the battery cell group, and the other end of the sampling unit extends out from the bottom of the end plate and passes through the box body to lead the signals to an outside of the box body.

16. The battery according to claim 14 or 15, wherein the sampling unit comprises:
a sampling unit body; and
an occluding portion, formed on an outer circumferential surface of the sampling unit body and protruding from the outer circumferential surface of the sampling unit body, wherein the occluding portion is configured for covering a gap between the sampling unit body and an inner wall of the passage.

17. A power consumption apparatus, comprising the battery according to any one of claims 1-16, wherein the battery is configured for providing electrical energy.

18. A battery manufacturing method, comprising:
providing a box body, wherein the box body comprises a side wall for forming an accommodating cavity by enclosing;
providing a battery cell group, wherein the battery cell group comprises a plurality of battery cells, and the plurality of battery cells are arranged in a stack;
providing an end plate and an electrical energy lead-out member, wherein the electrical energy lead-out member comprises a first segment, a second segment, and a third segment connected in sequence, the second segment is embedded in the end plate, and the first segment and the third segment extend out from the end plate;
disposing the battery cell group inside the accommodating cavity;
disposing the end plate and the electrical energy lead-out member inside the accommodating cavity, and positioning the end plate between the battery cell group and the side wall; and
connecting electrically the first segment to the battery cell group.

19. A battery manufacturing device, comprising:
a provision module, configured to provide a box body, a battery cell group, an end plate, and an electrical energy lead-out member, wherein the box body comprises a side wall for forming an accommodating cavity by enclosing, the battery cell group comprises a plurality of battery cells, the plurality of battery cells are arranged in a stack, the electrical energy lead-out member comprises a first segment, a second segment, and a third segment connected in sequence, the second segment is embedded in the end plate, and the first segment and the third segment extend out from the end plate; and
an assembly module, configured to dispose the battery cell group inside the accommodating cavity, dispose the end plate and the electrical energy lead-out member inside the accommodating cavity, position the end plate between the battery cell group and the side wall, and electrically connect the first segment to the battery cell group.
